# DEMANDE DE BREVET EUROPEEN

(11) **EP 2 947 855 A1**
(43) Date de publication de la demande: **25.11.2015**
(21) Numéro de dépôt: 15168796.9
(22) Date de dépôt: 22.05.2015
(51) Int. Cl.: H04L 29/08, B60R 25/00, H04M 1/00, H04W 4/04, H04L 29/06, H04W 4/00

(54) **DISPOSITIF DE COMMUNICATION ENTRE UNE INTERFACE HOMME-MACHINE D'UN VÉHICULE AUTOMOBILE ET UN TÉLÉPHONE MOBILE**

(30) Priorité: 23.05.2014 FR 1401189
(71) Demandeur: Valeo Comfort and Driving Assistance, 94046 Créteil Cedex (FR)
(72) Inventeur: ALBESA, Bruno, 94046 Créteil CEDEX (FR)

(57) **Abrégé**

La présente invention concerne un dispositif de communication (1) comprenant une interface homme-machine (20) pour véhicule automobile (2) et un téléphone mobile (3) comportant une unité d'affichage (31).

Ledit dispositif (1) se caractérise en ce qu'il comporte une clef USB (4) et est adapté pour :
- établir une première liaison de communication entre la clef USB (4) et le téléphone mobile (3) via le protocole d'interopérabilité MirrorLink® ;
- transmettre via ledit protocole d'interopérabilité MirrorLink® un premier ensemble de messages (F1) à partir dudit téléphone mobile (3) vers la clef USB, ledit premier ensemble de messages (F1) étant représentatif des informations (32) affichées par l'unité d'affichage (31) ;
- convertir le premier ensemble de messages (F1) en un deuxième ensemble de messages sous format HTML (F2) ;
- établir une deuxième liaison de communication entre la clef USB (4) et l'interface homme-machine (20) via le protocole de communication http ;
- transmettre via le protocole de communication http ledit deuxième ensemble de messages (F2) à partir de la clef USB vers ladite interface homme-machine (20) de sorte que tout ou partie des informations (32) affichées par l'unité d'affichage (31) du téléphone mobile (3) soient affichées sur ladite interface homme-machine (20).

## Description

### DOMAINE TECHNIQUE DE L'INVENTION

La présente invention concerne un dispositif de communication comportant une interface homme-machine d'un véhicule automobile et un téléphone mobile comportant une unité d'affichage.

La présente invention concerne également une clef USB pour un tel dispositif de communication, ladite clef USB comportant une unité de traitement.

La présente invention concerne également un procédé de communication mis en oeuvre par ledit dispositif de communication.

Elle trouve une application particulière mais non limitative dans le domaine des véhicules automobiles.

### ARRIÈRE-PLAN TECHNOLOGIQUE DE L'INVENTION

Dans le domaine des véhicules automobiles, un dispositif de communication connu met en oeuvre un protocole d'interopérabilité entre une interface homme-machine d'un véhicule automobile et un téléphone mobile comportant une unité d'affichage. Les téléphones nomades (appelés en anglais « smartphone ») proposent de plus en plus d'applications qui peuvent être utilisées pendant la conduite, telles que par exemple des applications de musique, d'informations de trafic, d'informations sur le temps, de radio etc. Différents protocoles de connectivité ont été définis afin de permettre une communication entre le téléphone mobile et une interface homme-machine d'un véhicule automobile. Un exemple de protocole d'interopérabilité est le protocole « Terminal Mode » également appelé « MirrorLink^{®} » qui a été mis en place par le consortium CCC (« Car Connectivity Consortium »). Grâce à ce protocole d'interopérabilité, le conducteur du véhicule automobile peut utiliser les applications de son téléphone mobile depuis son véhicule automobile. En effet, l'écran de son téléphone mobile s'affiche en miroir sur une interface homme-machine de son véhicule. Les commandes saisies sur l'interface homme-machine du véhicule automobile sont redirigées vers le téléphone mobile.

Un inconvénient de cet état de la technique est que cette solution ne peut s'appliquer aux interfaces homme-machine des véhicules automobiles déjà existantes sur le marché et qui ne supportent pas le protocole d'interopérabilité MirrorLink^{®} sans mettre en oeuvre des modifications importantes et complexes notamment sur lesdites interfaces.

### DESCRIPTION GENERALE DE L'INVENTION

A cette fin l'invention propose un dispositif de communication comprenant
- une interface homme-machine pour véhicule automobile ; et
- un téléphone mobile comportant une unité d'affichage, ledit dispositif de communication comprenant en outre une clef USB, ledit dispositif de communication étant adapté pour :
- établir une première liaison de communication entre la clef USB et le téléphone mobile via le protocole d'interopérabilité MirroLink® ;
- transmettre via ledit protocole d'interopérabilité MirroLink® un premier ensemble de messages à partir dudit téléphone mobile vers la clef USB, ledit premier ensemble de messages étant représentatif des informations affichées par l'unité d'affichage ;
- convertir le premier ensemble de messages en un deuxième ensemble de messages sous format HTML ;
- établir une deuxième liaison de communication entre la clef USB et l'interface homme-machine via le protocole de communication http ;
- transmettre via le protocole de communication http ledit deuxième ensemble de messages à partir de la clef USB vers ladite interface homme-machine de sorte que tout ou partie des informations affichées par l'unité d'affichage du téléphone mobile soient affichées sur ladite interface homme-machine.

Ainsi, grâce à la clef USB, on propose une passerelle de communication entre un téléphone mobile et une interface homme-machine du véhicule automobile simple à réaliser. On peut ainsi proposer à un utilisateur du véhicule automobile d'accéder à ses applications mobiles via par exemple un écran de son véhicule automobile, sans pour autant apporter de modifications au logiciel de gestion dudit écran.

Selon des modes de réalisation non limitatifs, le dispositif de communication peut comporter en outre une ou plusieurs caractéristiques supplémentaires parmi les suivantes.

Selon un mode de réalisation non limitatif, le dispositif de communication est en outre adapté pour transmettre via le protocole de communication http un troisième ensemble de messages sous format HTML à partir de ladite interface homme-machine vers la clef USB, ledit troisième ensemble de messages étant représentatif d'une interaction d'un utilisateur du véhicule automobile avec une application du téléphone mobile.

Selon un mode de réalisation non limitatif :
- la première liaison de communication s'effectue via une connexion filaire et/ou sans fil ;
- la deuxième liaison de communication s'effectue via une connexion filaire.

Selon un mode de réalisation non limitatif, ladite interface homme-machine est un écran ou un afficheur tête haute.

Il est également proposé une clef USB pour dispositif de communication, ladite clef USB comportant une unité de traitement, ladite unité de traitement étant adaptée pour :
- suite à l'établissement d'une première liaison de communication entre la clef USB et le téléphone mobile via le protocole d'interopérabilité MirrorLink®, recevoir via ledit protocole d'interopérabilité MirrorLink® un premier ensemble de messages dudit téléphone mobile, ledit premier ensemble de messages étant représentatif des informations affichées par l'unité d'affichage ;
- convertir le premier ensemble de messages en un deuxième ensemble de messages sous format HTML ;
- suite à l'établissement d'une deuxième liaison de communication entre la clef USB et l'interface homme-machine via le protocole de communication http, envoyer via le protocole de communication http ledit deuxième ensemble de messages à ladite interface homme-machine de sorte que tout ou partie des informations affichées par l'unité d'affichage du téléphone mobile soient affichées sur l'interface homme-machine.

Il est également proposé un procédé de communication entre une interface homme-machine pour véhicule automobile et un téléphone mobile comportant une unité d'affichage, ledit procédé comportant :
- l'établissement d'une première liaison de communication entre la clef USB et le téléphone mobile via le protocole d'interopérabilité MirroLink® ;
- la transmission via ledit protocole d'interopérabilité MirroLink® d'un premier ensemble de messages à partir dudit téléphone mobile vers la clef USB, ledit premier ensemble de messages étant représentatif des informations affichées par l'unité d'affichage ;
- la conversion du premier ensemble de messages en un deuxième ensemble de messages sous format HTML ;
- l'établissement d'une deuxième liaison de communication entre la clef USB et l'interface homme-machine via le protocole de communication http ;
- la transmission via le protocole de communication http dudit deuxième ensemble de messages à partir de la clef USB vers ladite interface homme-machine de sorte que tout ou partie des informations affichées par l'unité d'affichage du téléphone mobile soient affichées sur ladite interface homme-machine.

Selon un mode de réalisation non limitatif, ledit procédé comporte en outre :
- la transmission via le protocole de communication http d'un troisième ensemble de messages sous format HTML à partir de ladite interface homme-machine vers la clef USB, ledit troisième ensemble de messages étant représentatif d'une interaction d'un utilisateur du véhicule automobile avec une application du téléphone mobile ;
- la conversion dudit troisième ensemble de messages en un quatrième ensemble de message sous format utilisé par le protocole d'interopérabilité MirrorLink® ;
- la transmission via le protocole d'interopérabilité MirrorLink® dudit quatrième ensemble de messages à partir de la clef USB vers le téléphone mobile.

### BREVE DESCRIPTION DES FIGURES

L'invention et ses différentes applications seront mieux comprises à la lecture de la description qui suit et à l'examen des figures qui l'accompagnent.
- la figure 1 représente un dispositif de communication entre un véhicule automobile et un téléphone mobile selon un mode de réalisation non limitatif de l'invention ;
- la figure 2 représente un procédé de communication mis en oeuvre par le dispositif de communication de la figure 1, selon un mode de réalisation non limitatif ; et
- la figure 3 représente un diagramme de séquences illustrant le procédé de communication de la figure 2.

### DESCRIPTION DE MODES DE REALISATION DE L'INVENTION

Les éléments identiques, par structure ou par fonction, apparaissant sur différentes figures conservent, sauf précision contraire, les mêmes références.

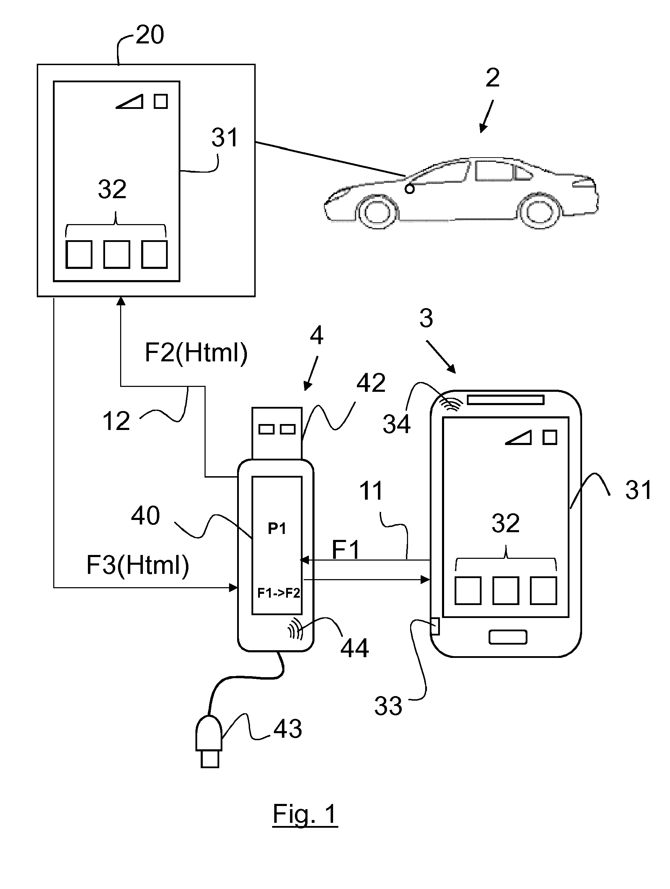

Tel qu'illustré sur la figure 1, le dispositif de communication 1 comprend :
- un téléphone mobile 3 qui comporte une unité d'affichage 31 ;
- une interface homme-machine 20 pour véhicule automobile 2 ;
- une clef USB 4 qui comporte une unité de traitement 40.

Le dispositif de communication 1 est adapté pour :
- établir une première liaison de communication 11 entre la clef USB 4 et le téléphone mobile 3 via le protocole d'interopérabilité MirrorLink® (référencé P1 sur la figure) ;
- transmettre via ledit protocole d'interopérabilité MirrorLink® un premier ensemble de messages F1 à partir dudit téléphone mobile 3 vers la clef USB 4, ledit premier ensemble de messages F1 étant représentatif des informations 32 affichées par l'unité d'affichage 31 ;
- convertir le premier ensemble de messages F1 en un deuxième ensemble de messages sous format HTML F2 ;
- établir une deuxième liaison de communication 12 entre la clef USB 4 et l'interface homme-machine 20 via le protocole de communication http ;
- transmettre via le protocole de communication http ledit deuxième ensemble de messages F2 à partir de la clef USB 4 vers ladite interface homme-machine 20 de sorte que tout ou partie des informations 32 affichées par l'unité d'affichage 31 du téléphone mobile 3 soient affichées sur ladite interface homme-machine 20.

Dans un mode de réalisation non limitatif, le dispositif de communication est en outre adapté pour :
- transmettre via le protocole de communication http un troisième ensemble de messages F3 sous format HTML à partir de ladite interface homme-machine 20 vers la clef USB, ledit troisième ensemble de messages F3 étant représentatif d'une interaction d'un utilisateur du véhicule automobile 2 avec une application du téléphone mobile 3.

On notera qu'un ensemble de messages comporte un ou plusieurs messages.

Les différents éléments du dispositif de communication sont décrits ci-après.

### • Téléphone mobile 3

Le téléphone mobile 3 (couramment appelé en anglais « smartphone ») illustré également sur la figure 1, comporte :
- une unité d'affichage 31 ;
- des informations 32, lesdites informations étant affichées par ladite unité d'affichage 31. Dans un mode de réalisation non limitatif, les informations 32 comprennent les données d'interaction avec les applications qui fonctionnent sur le téléphone 3 (telles que des icônes), et des données provenant de ces applications, telles que des flux vidéo, des flux audio, du texte etc. ;
- une unité de traitement (non illustrée) adaptée pour mettre en oeuvre le protocole d'interopérabilité MirrorLink® ;
- une connexion filaire 33 et/ou sans fil 34 pour la connexion avec la clef USB 4.

Dans la suite de la description, les différentes unités de traitement citées sont dans un exemple non limitatif un microprocesseur.

On notera que le protocole d'interopérabilité MirrorLink® connu de l'homme du métier définit différentes couches de communication (physique, liaison, réseau, transport, session et application) qui permettent de manière classique à un téléphone mobile et un autre dispositif de se connecter ensemble et d'échanger des informations, de sorte qu'un utilisateur du téléphone mobile peut interagir avec son téléphone mobile de manière distante via l'autre dispositif. Par ailleurs, ce protocole d'interopérabilité utilise des premiers ensembles de messages F1 dédiés, qui comprennent une sémantique propre.

En utilisant ce protocole d'interopérabilité MirrorLink^{®}, l'unité de traitement est adaptée pour :
- établir une première liaison de communication 11 avec la clef USB 4 ;
- envoyer à ladite clef USB 4 un premier ensemble de messages F1, ledit premier ensemble de messages F1 étant représentatif des informations 32 affichées par l'unité d'affichage 31.

On notera que le téléphone mobile 3 fait office d'hôte (« host » en anglais) et vérifie si un périphérique se connecte. Lorsque la clef USB se connecte, l'hôte vérifie les droits d'accès de la clef, et après autorisation établit la première liaison de communication 11. Autrement dit, la clef USB tient lieu de client et vient chercher les informations 32 sur un serveur qui est le téléphone mobile 3.

La première liaison de communication 11 avec la clef USB 4 s'effectue au niveau de la couche physique via la connexion filaire 33 ou via la connexion sans fil 34.

### • Interface homme-machine 20

Dans des modes de réalisation non limitatifs, l'interface homme-machine 20 du véhicule automobile 2 (appelée également ihm) est :
- un écran du véhicule, tel que dans des exemples non limitatif, l'écran GPS (« Global Positioning System »), le tableau de bord du véhicule, ou tout autre écran multimédia ou système d'info-divertissement embarqués (appelés en anglais « infotainement systems ») ;
- un dispositif d'affichage d'informations reconfigurable, par exemple un afficheur tête haute HUD appelé en anglais « Head Up Display ». Un afficheur tête haute HUD étant connu de l'homme du métier, il n'est pas décrit ici.

L'interface homme-machine 20 comporte une unité de traitement (non illustrée) adaptée pour mettre en oeuvre le protocole de communication http (« Hypertext Transfer Protocol »).
Ce protocole de communication permet de transmettre des informations sous format HTML (« HyperText Mark-Up Language ») de l'interface homme-machine 20 vers la clef USB 4, et de recevoir des informations sous format HTML de la clef USB 4.

Ladite unité de traitement est adaptée pour :
- établir une deuxième liaison de communication 12 avec la clef USB 4 via le protocole de communication http ;
- recevoir via le protocole http un deuxième ensemble de messages F2 sous format HTML de la clef USB 4 ;
- afficher tout ou partie des informations 32 de l'unité d'affichage 31 du téléphone mobile 3 sur l'interface homme-machine 20 du véhicule automobile 2.

Dans un mode de réalisation non limitatif, au niveau de la couche physique, la deuxième liaison de communication 12 s'effectue via un connecteur USB (non illustré) du véhicule automobile 2 adapté pour recevoir la clef USB 4. On notera que les véhicules comportent de manière classique de tels connecteurs USB.

Le deuxième ensemble de message F2 qui est une transcription en HTML du premier ensemble de messages F1, est représentatif des informations 32 affichées par l'unité d'affichage 31 du téléphone mobile 3. L'interface 20 affiche ainsi une image de l'écran du téléphone 3. L'utilisateur du véhicule va pouvoir agir sur son téléphone 3 via ladite interface 3.
Dans un premier mode de réalisation non limitatif, tout ou partie des informations 32 est affichées sur la totalité de ladite interface homme-machine 20.
Dans un deuxième mode de réalisation non limitatif, tout ou partie des informations 32 est affichées sur une région de ladite interface homme-machine 20.

On notera qu'une partie des informations 32 qui sont affichées sur l'écran du téléphone 3 peuvent ne pas être affichées sur l'ihm 20 du véhicule 2. Dans un exemple non limitatif, les icônes des applications vidéo ne sont pas affichées.

### • Clef USB 4

La clef USB 4 comprend :
- une unité de traitement 40 adaptée pour mettre en oeuvre le protocole d'interopérabilité MirrorLink® décrit précédemment ;
- une première connexion filaire 43 et/ou sans fil 44 pour la connexion avec le téléphone mobile 3 ;
- une deuxième connexion filaire 42 pour la connexion avec le véhicule 2.

Dans un premier mode de réalisation non limitatif, la première connexion filaire est composée d'une fiche femelle 43 adaptée pour être enfichée dans une fiche mâle 33 du téléphone mobile 3.
Dans un deuxième mode de réalisation non limitatif, la première connexion sans fil est composée d'un récepteur/émetteur 44 adapté pour émettre/recevoir des données d'un émetteur/récepteur correspondant 34 du téléphone mobile 3. Dans un exemple de réalisation non limitatif, la connexion sans fil s'effectue via le protocole WIFI^{Tm}.
Dans un mode de réalisation non limitatif, la deuxième connexion filaire 42 est une prise USB adaptée pour être enfichée dans un connecteur USB du véhicule automobile 2.

L'unité de traitement 40 est adaptée pour :
- à la suite de l'établissement de la première liaison de communication 11 entre la clef USB 4 et le téléphone mobile 3 via le protocole d'interopérabilité MirrorLink^{®}, recevoir un premier ensemble de messages F1 dudit téléphone mobile 3 via ledit protocole d'interopérabilité MirrorLink^{®}, ledit premier ensemble de messages F1 étant représentatif des informations 32 affichées par l'unité d'affichage 31 ;
- convertir le premier ensemble de messages F1 en un deuxième ensemble de messages sous format HTML F2 ;
- à la suite de l'établissement de la deuxième liaison de communication 12 entre la clef USB 4 et l'interface homme-machine 20 via le protocole de communication http, envoyer ledit deuxième ensemble de messages F2 à ladite interface homme-machine 20 de sorte que tout ou partie des informations 32 affichées par l'unité d'affichage 31 du téléphone mobile 3 soient affichées sur l'interface homme-machine 20 du véhicule automobile 2.

On notera que la clef USB 4 comporte un tableau de conversion entre le format des messages F1 et le format HTML qui est utilisé de manière à obtenir les messages F2.
Par ailleurs on notera que le protocole d'interopérabilité MirrorLink® permet de faire une copie totale des informations 32 affichées par l'unité d'affichage 31 du téléphone mobile 3 et l'unité de traitement 40 est adaptée pour filtrer lesdites informations reçues 32. Autrement dit, l'unité de traitement 40 est adaptée pour autoriser ou interdire l'affichage de certaines informations (correspondant par exemple à certaines applications) sur l'interface homme-machine 20 du véhicule automobile 2, et ce en fonction de leur nature. Dans un exemple non limitatif, les informations relatives aux vidéos ne sont pas affichées.

Ainsi, un utilisateur du véhicule automobile 2, et en particulier le conducteur accède aux applications qui sont fournies par le téléphone mobile 3 via par exemple un écran 20 de son véhicule automobile. Il aura notamment une plus grande visibilité sur ces applications puisque l'écran 20 est plus grand que celui de son téléphone mobile 3. De plus, l'utilisateur aura un accès plus ergonomique et plus facile à ses applications puisqu'il va pouvoir utiliser les différents accessoires/fonctions (boutons, micros, écran tactile etc.) fournis avec son écran pour accéder à ses applications mobiles. Il peut ainsi piloter et interagir avec ses applications depuis son véhicule 2 et donner ainsi des ordres à son téléphone mobile.

Ainsi, la clef USB 4 sert de passerelle de communication entre le téléphone 3 et l'interface homme-machine 20 en convertissant les flux d'informations 32 provenant du téléphone 3 de manière à ce qu'ils soient compréhensibles par l'interface 20, ladite interface n'implémentant pas le protocole d'interopérabilité MirrorLink^{®}, mais implémentant uniquement le langage HTML. L'interface 20 a juste besoin d'ouvrir une fenêtre http.

L'unité de traitement 40 de la clef USB 4 est en outre adaptée pour recevoir un troisième ensemble de messages F3 sous format HTML de ladite interface homme-machine 20 via le protocole de communication http, ledit troisième ensemble de messages F3 étant représentatif d'une interaction d'un utilisateur du véhicule automobile 2 avec une application du téléphone mobile 3. Elle convertit ledit troisième ensemble de messages F3 en format de message MirrorLink® et transmet ledit troisième ensemble de messages F3 audit téléphone mobile 3 via le protocole d'interopérabilité MirrorLink®. Le téléphone mobile 3 enregistre ainsi les actions de l'utilisateur sur les applications mobiles et les met en oeuvre.

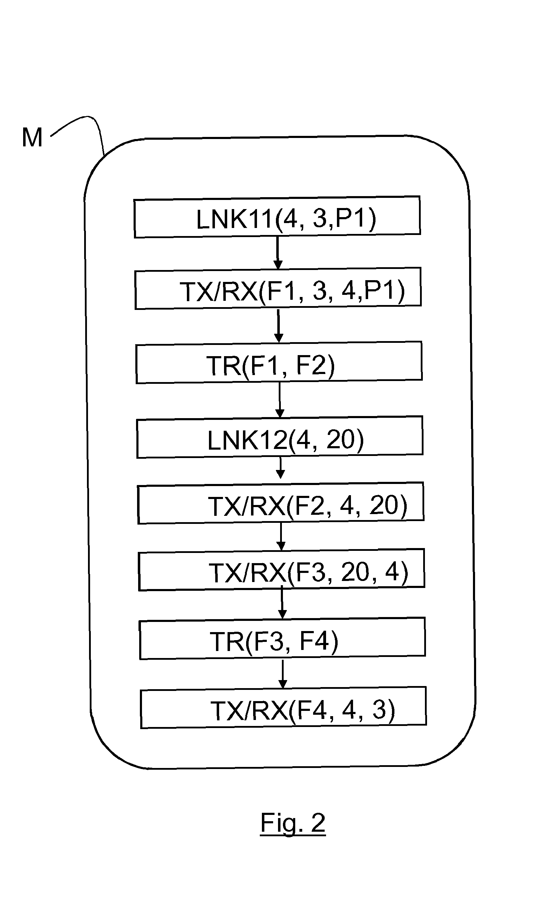

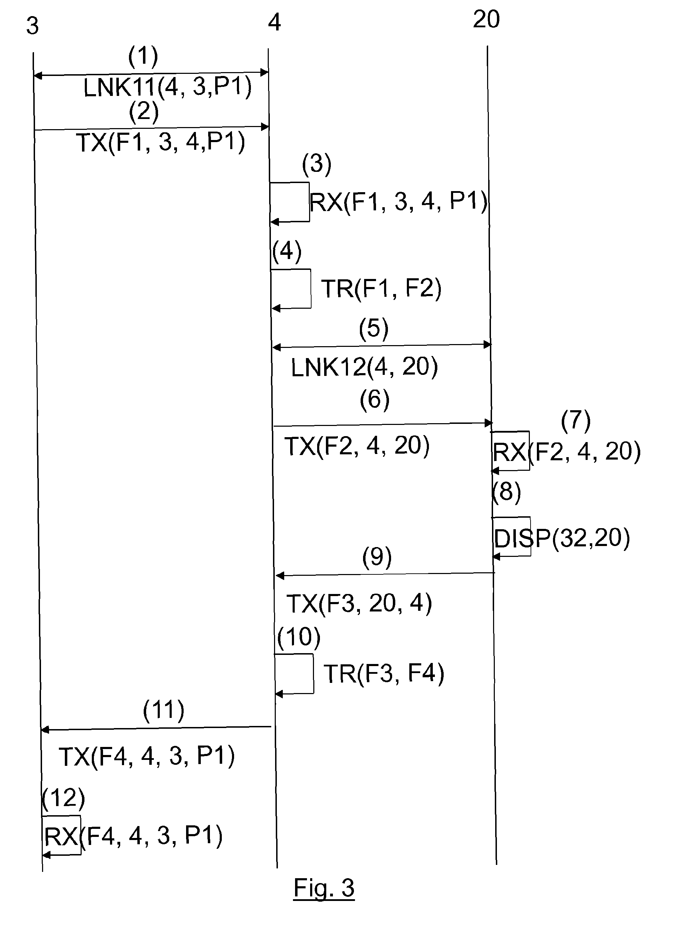

Ainsi, le dispositif de communication 1 décrit permet de mettre en oeuvre le procédé M illustré aux figure 2 et figure 3 et décrit ci-après.

Comme illustré à la figure 2, le procédé M comporte :
- l'établissement d'une première liaison de communication 11 entre la clef USB 4 et le téléphone mobile 3 via le protocole d'interopérabilité MirrorLink^{®} (illustré LNK11(4,3,P1)) ;
- la transmission via ledit protocole d'interopérabilité MirrorLink^{®} d'un premier ensemble de messages F1 à partir dudit téléphone mobile 3 vers la clef USB 4, ledit premier ensemble de messages F1 étant représentatif des informations 32 affichées par l'unité d'affichage 31 (illustré TX/RX(F1,3, 4,P1)) ;
- la conversion du premier ensemble de messages F1 en un deuxième ensemble de messages F2 correspondant sous format HTML (illustré TR(F1,F2));
- l'établissement d'une deuxième liaison de communication 12 entre la clef USB 4 et l'interface homme-machine 20 via le protocole de communication http (illustré LNK12(4, 20)) ;
- la transmission via le protocole de communication http dudit deuxième ensemble de messages F2 à partir de la clef USB 4 vers ladite interface homme-machine 20 de sorte que tout ou partie des informations 32 affichées par l'unité d'affichage 31 du téléphone mobile 3 soient affichées sur ladite interface homme-machine 20 (illustré TX/RX(F2,4, 20)).

Dans un mode de réalisation non limitatif, le procédé M comporte en outre :
- la transmission via le protocole de communication http d'un troisième ensemble de messages F3 sous format HTML à partir de ladite interface homme-machine 20 vers la clef USB 4, ledit troisième ensemble de messages F3 étant représentatif d'une interaction d'un utilisateur du véhicule automobile 2 avec une application du téléphone mobile 3 (illustré TX/RX(F3, 20, 4)) ;
- la conversion dudit troisième ensemble de messages F3 en un quatrième ensemble de message F4 correspondant sous format utilisé par le protocole d'interopérabilité MirrorLink® (illustré TR(F3, F4)) ;
- la transmission via le protocole d'interopérabilité MirrorLink® dudit quatrième ensemble de messages F4 à partir de la clef USB 4 vers le téléphone mobile 3 (illustré TX/RX(F4, 4,3, P1)).

La **figure 3** illustre l'enchaînement des différentes étapes ; Comme on peut le voir sur la figure, après l'établissement de la première liaison de communication 11 (étape 1 illustrée LNK11(4,3, P1)) via le protocole d'interopérabilité MirrorLink^{®} par la téléphone mobile 3 quand la clef USB 4 se connecte audit téléphone, le téléphone mobile 3 envoie le premier ensemble de messages F1 à la clef USB 4 (étape 2 illustrée TX(F1, 3, 4,P1). Cette dernière reçoit le premier ensemble de message F1 (étape 3 illustrée RX(F1, 3, 4, P1)) et le convertit en un deuxième ensemble de messages F2 (étape 4 illustrée TR(F1,F2))). La clef USB qui est connectée à l'interface homme-machine 20 établit le deuxième lien de communication 12 avec la clef USB 4 (étape 5 illustrée LNK12(4,20)) qui lui envoie le deuxième ensemble de messages F2 (étape 6 illustrée TX(F2, 4, 20)). Ladite interface 20 reçoit cet ensemble de message F2 (étape 7 illustrée RX(F2, 4, 20)) et affiche tout ou partie des informations 32 de l'unité d'affichage 31 du téléphone 3 (étape 8 illustrée DISP(32, 20)). Ainsi, un utilisateur du véhicule, et notamment le conducteur, peut maintenant accéder à ses applications mobiles via l'interface 20 du véhicule 2.

On notera que l'établissement de la deuxième liaison de communication 12 peut se faire à tout moment, dès que la clef USB 4 se connecte physiquement au connecteur USB du véhicule 2. Ainsi, l'établissement de la deuxième liaison de communication 12 (étape 5) peut se faire en même temps que l'établissement de la première liaison de communication 11 (étape 1).

Par la suite, lorsque le conducteur interagit via l'interface 20 de son véhicule, par exemple avec une de ses applications mobiles 32, le téléphone mobile 3 est averti de cette interaction au moyen d'un quatrième ensemble de messages F4 représentatif de ladite interaction. En effet, l'interface homme-machine 20 envoie un troisième ensemble de messages F3 représentatif de ladite interaction via le protocole http à la clef USB 4 (étape 9 illustrée TX(F3, 20, 4)) qui le convertit en format de message supporté par le protocole MirrorLink® en un quatrième ensemble de messages F4 correspondant (étape 10 illustrée TR(F3, F4)) et transmet cet ensemble de messages F4 au téléphone mobile 3 (étape 10 illustrée TX(F3, 4, 3, P1)) via le protocole d'interopérabilité MirrorLink®. Sur réception de cet ensemble F4 (étape 11 illustrée RX(F4, 4, 3)), le téléphone mobile 3 prend en compte l'action de l'utilisateur sur son application 32.

Bien entendu la description de l'invention n'est pas limitée à l'application, aux modes de réalisation et aux exemples décrits ci-dessus.
Ainsi, tout autre protocole de transmission adapté peut être utilisé pour transmettre les ensembles de messages F2 et F3 sous format HTML.

Ainsi, l'invention décrite présente notamment les avantages suivants :
- elle offre une passerelle, la clef USB, entre l'interface homme-machine du véhicule et le téléphone mobile qui convertit l'image qui apparaît sur ladite interface homme-machine de manière à la reproduire sur ladite interface homme-machine embarquée dans le véhicule ;
- elle permet ainsi d'apporter une solution simple d'accès aux informations visibles sur l'écran du téléphone mobile et notamment à ses applications via une interface homme-machine du véhicule, les applications demeurant dans le téléphone mobile ;
- elle ne nécessite pas de changements au niveau du logiciel de gestion des écrans du véhicule, ni au niveau hardware, ni au niveau des téléphones nomades intégrant le protocole d'interopérabilité MirrorLink® ;
- elle permet d'établir la communication avec des ihm du véhicule déjà existantes qui ne mettent pas en oeuvre le protocole d'interopérabilité MirrorLink® ;
- elle ne nécessite pas de moyens coûteux et spécialement dédiés pour la communication, ni de connecteur physique particulier dans le véhicule, puisqu'elle utilise uniquement une clef et un connecteur USB du véhicule automobile.

## Revendications

1. Dispositif de communication (1) comprenant
- une interface homme-machine (20) pour véhicule automobile (2) ; et
- un téléphone mobile (3) comportant une unité d'affichage (31), selon lequel ledit dispositif de communication comprend en outre une clef USB (4), ledit dispositif de communication (1) étant adapté pour :
- établir une première liaison de communication (11) entre la clef USB (4) et le téléphone mobile (3) via le protocole d'interopérabilité MirroLink® (P1) ;
- transmettre via ledit protocole d'interopérabilité MirroLink® (P1) un premier ensemble de messages (F1) à partir dudit téléphone mobile (3) vers la clef USB (4), ledit premier ensemble de messages (F1) étant représentatif des informations (32) affichées par l'unité d'affichage (31) ;
- convertir le premier ensemble de messages (F1) en un deuxième ensemble de messages sous format HTML (F2) ;
- établir une deuxième liaison de communication (12) entre la clef USB (4) et l'interface homme-machine (20) via le protocole de communication http ;
- transmettre via le protocole de communication http ledit deuxième ensemble de messages (F2) à partir de la clef USB (4) vers ladite interface homme-machine (20) de sorte que tout ou partie des informations (32) affichées par l'unité d'affichage (31) du téléphone mobile (3) soient affichées sur ladite interface homme-machine (20).

2. Dispositif de communication (1) selon la revendication 1, selon lequel le dispositif de communication (1) est en outre adapté pour :
- transmettre via le protocole de communication http un troisième ensemble de messages (F3) sous format HTML à partir de ladite interface homme-machine (20) vers la clef USB (4), ledit troisième ensemble de messages (F3) étant représentatif d'une interaction d'un utilisateur du véhicule automobile (2) avec une application du téléphone mobile (3).

3. Dispositif de communication (1) selon l'une quelconque des revendications précédentes 1 ou 2, selon lequel :
- la première liaison de communication (11) s'effectue via une connexion filaire et/ou sans fil (43-33, 44-34) ;
- la deuxième liaison de communication (12) s'effectue via une connexion filaire (42-22).

4. Dispositif de communication (1) selon l'une quelconque des revendications précédentes 1 à 3, selon lequel ladite interface homme-machine (20) est un écran ou un afficheur tête haute.

5. Clef USB (4) pour dispositif de communication (1), ladite clef USB comportant une unité de traitement (40), selon laquelle ladite unité de traitement (40) étant adaptée pour :
- suite à l'établissement d'une première liaison de communication (11) entre la clef USB (4) et le téléphone mobile (3) via le protocole d'interopérabilité MirroLink® (P1), recevoir via ledit protocole d'interopérabilité MirroLink® (P1) un premier ensemble de messages (F1) dudit téléphone mobile (3), ledit premier ensemble de messages (F1) étant représentatif des informations (32) affichées par l'unité d'affichage (31);
- convertir le premier ensemble de messages (F1) en un deuxième ensemble de messages sous format HTML (F2) ;
- suite à l'établissement d'une deuxième liaison de communication (12) entre la clef USB (4) et l'interface homme-machine (20) via le protocole de communication http, envoyer via le protocole de communication http ledit deuxième ensemble de messages (F2) à ladite interface homme-machine (20) de sorte que tout ou partie des informations (32) affichées par l'unité d'affichage (31) du téléphone mobile (3) soient affichées sur l'interface homme-machine (20).

6. Procédé de communication (M) entre une interface homme-machine (20) pour véhicule automobile (2) et un téléphone mobile (3) comportant une unité d'affichage (31), selon lequel ledit procédé comporte :
- l'établissement d'une première liaison de communication (11) entre la clef USB (4) et le téléphone mobile (3) via le protocole d'interopérabilité MirroLink® (P1) ;
- la transmission via ledit protocole d'interopérabilité MirroLink® (P1) d'un premier ensemble de messages (F1) à partir dudit téléphone mobile (3) vers la clef USB (4), ledit premier ensemble de messages (F1) étant représentatif des informations (32) affichées par l'unité d'affichage (31) ;
- la conversion du premier ensemble de messages (F1) en un deuxième ensemble de messages sous format HTML (F2) ;
- l'établissement d'une deuxième liaison de communication (12) entre la clef USB (4) et l'interface homme-machine (20) via le protocole de communication http ;
- la transmission via le protocole de communication http dudit deuxième ensemble de messages (F2) à partir de la clef USB (4) vers ladite interface homme-machine (20) de sorte que tout ou partie des informations (32) affichées par l'unité d'affichage (31) du téléphone mobile (3) soient affichées sur ladite interface homme-machine (20).

7. Procédé de communication (M) selon la revendication précédente 6, selon lequel ledit procédé comporte en outre :
- la transmission via le protocole de communication http d'un troisième ensemble de messages (F3) sous format HTML à partir de ladite interface homme-machine (20) vers la clef USB (4), ledit troisième ensemble de messages (F3) étant représentatif d'une interaction d'un utilisateur du véhicule automobile (2) avec une application du téléphone mobile (3).
